# EUROPEAN PATENT SPECIFICATION

(11) **EP 0 345 849 B1**
(45) Date of publication and mention of the grant of the patent: **31.03.1993**
(21) Application number: 89201322.8
(22) Date of filing: 22.05.1989
(51) Int. Cl.: B65G 65/48

(54) **Discharge device**
Entladevorrichtung
Dispositif de déchargement

(30) Priority: 07.06.1988 NL 8801456
(43) Date of publication of application: 13.12.1989
(73) Proprietor: Vink, Johannes Albartus, NL-3621 WV Breukelen (NL)
(72) Inventor: Vink, Johannes Albartus, NL-3621 WV Breukelen (NL)
(74) Representative: de Vries, Johannes Hendrik Fokke

(56) References cited:
- DE-C- 331 126
- FR-A- 1 546 792
- FR-A- 2 092 109

## Description

The invention relates to a discharge device for use in a countercurrent cooler or the like according to the preamble of claim 1.

Discharge devices of this type are meant for a controlled discharge of a product from a product reservoir, thereby enabling a good cooling air passage through the product. Such discharge devices are constructed in such a way that always only the lowermost part of the product mass present in the product reservoir will be discharged. In a known discharge device of this type (as described in DE-C-331.126) the discharge elements comprise solid cylinders with longitudinally extending surface grooves. These cylinders are separated only by guiding walls.

It is an object of the invention to further improve this discharge device.

As a result the discharge device according to the invention is characterized as appears from the characterizing portion of claim 1.

The cylinders that substantially mutually adjoin define an effective supporting plane for the product present in the product reservoir. However, because according to the invention the cylinders are hollow and comprise said perforations over their entire circumference the cooling air at all times can pass these cylinders without problems. Further the flow resistance of the cooling air or the like flowing through the discharge device is minimized. Always again when a slot-shaped opening is positioned at the top of a cylinder where the product is supported by the cylinder this product flows into this slot-shaped opening. During the successive rotation of the cylinders the slot-shaped openings filled in this way shall be emptied at a certain moment, namely when the slot-shaped openings are positioned at the lower side of the cylinders.

The discharge velocity of the discharge device is substantially independent from the type of product. The problem of pulverising the product (such as between stationary and moving parts), thereby producing the so-called "fines", does not; the product can without restrictions flow into and out of the slot-shaped openings of the cylinders. Furthermore, the slot-shaped openings cover the entire product supporting plane of the discharge device when the cylinders rotate such that a complete discharge occurs, this means that no product remains in the product reservoir. When the cylinders are at a stand still the product can not pass these cylinders irrespective the position of these cylinders; however, the cooling air can.

From FR-A-1.546.792 it is known to provide a cylinder of a discharge device with openings ("perforations"). These however are only positioned at one side of the cylinder, thus not allowing air to pass through the cylinder, but only into and out of it at the same side.

According to a preferred embodiment of the discharge device according to the invention all cylinders can rotate in the some direction of rotation. As a result it is prevented that the product will be pulverised in the pinch between two adjoining cylinders.

Further it is advantageous if a wall section extends inwardly from the rearmost edge of each slot-shaped opening as seen in the direction of rotation, whereas another wall section meets the inner end of the first-named wall section, which other wall section extends spirally in the direction of rotation and together with the circumferential wall of the respective cylinder defines a narrowing channel that communicates with the inside of the cylinder.

A result of the described special design of the cylinders is that product quantities that during the rotation of the cylinder possibly have reached the enterior of the cylinders via the perforations will flow via the channel along the circumferential wall of the cylinder and will eventually leave the cylinder via the slot-shaped opening.

Moreover it is preferred if the slot-shaped openings of the different cylinders take in mutually different angular positions regularly divided in circumferential direction. This results in a regular discharge of the product. Due to this the capacity of further machining devices for the product positioned behind (or below) the discharge device can be minimized.

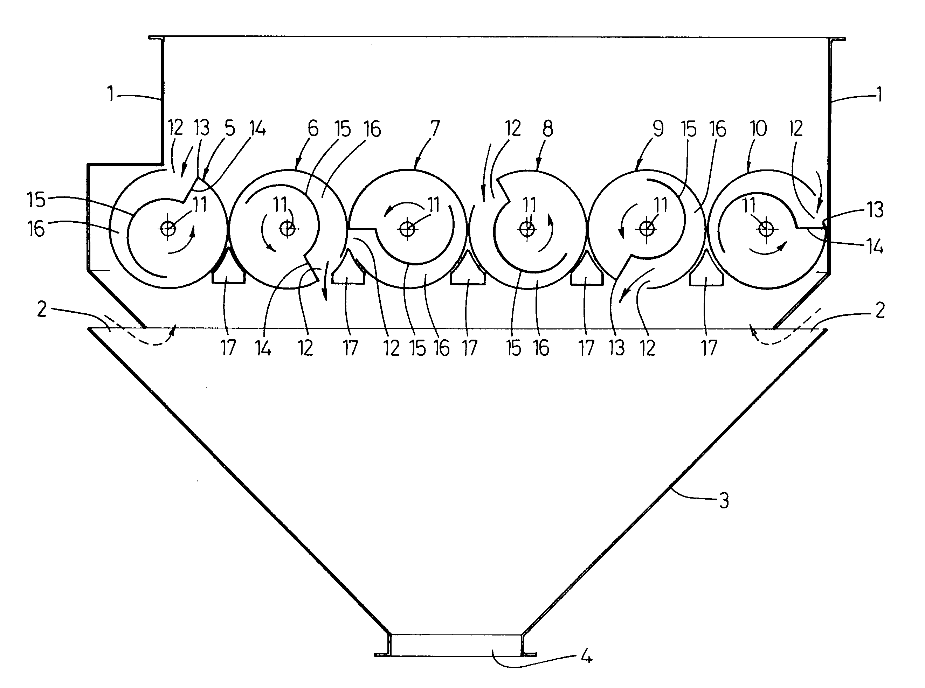

Hereinafter the invention will be elucidated by means of the only figure in which an embodiment of the discharge device according to the invention is schematicly illustrated.

The discharge device illustrated in the figure is positioned close to the bottom of a product reservoir 1 which is part of a counter current cooler or the like. Below the discharge device air suction openings 2 are provided through which, by means of a not shown air suction device, air is sucked through the discharge device and the product reservoir 1. Below the discharge device and the product reservoir 1 an outlet section 3 known per se having an outlet opening 4 for the product is provided.

The discharge device itself comprises a number of juxtaposed and substantially mutually adjoining cylinders 5-10. The center lines 11 which constitute the axes of rotation of the cylinders 5-10 all extend horizontally and mutually in parallel. In the shown embodiment the central lines 11 of the cylinders 5-10 moreover are all positioned in one horizontal plane.

At their circumference all the cylinders 5-10 are provided with a slot-shaped opening 12 extending mainly in the longitudinal direction of the cylinders. The direction of rotation of the cylinders 5-10 is indicated by a curved arrow. As appears clearly this direction of rotation is the same for all cylinders.

The cylinders 5-10 are shaped hollow whereby a wall section 14 extends inwardly from the rearmost edge 13 (see for example cylinder 5) of the slot-shaped openings 12 as seen in the direction of rotation, whereas another wall section 15 meets the inner end of the first named wall section 14 which other wall section 15 extends spirally in the direction of rotation and together with the circumferential wall of the respective cylinder 5-10 defines a narrowing channel 16 that communicates with the inside of the corresponding cylinder 5-10.

Generally the slot-shaped openings 12 will extend in the longitudinal direction of the cylinders 5-10 in parallel with the center lines 11. It is possible however that the slot-shaped openings 12 are somewhat spirally shaped.

As appears clearly from the figure the slot-shaped openings 12 of the different cylinders 5-10 take in mutually different angular positions regularly devided in circumferential direction. In the shown embodiment of the discharge device six cylinders 5-10 are provided wherein in circumferential direction the slot-shaped openings 12 are off-set 60° or a multiple thereof relative to the other slot-shaped openings 12.

To prevent that a high friction occurs between the outer wall of the rotating cylinders 5-10 and the product present thereabove, which could lead to an undesired influence on this product, the cylinders 5-10 are rotated slowly when the discharge device functions. For example the rate of rotation can be 1-2 r.p.m.. The cylinders 5-10 are manufactured from perforated material, such that the air sucked in via the air suction openings 2 can easily pass the cylinders irrespective whether these are at a stand-still or rotating. In the shown position part of the product present in the product reservoir 1 can flow in the cylinders 5, 8 and 10 via the openings 12. In fact cylinder 10 is in the position in which this flowing in of the product has just started. During the proceeding rotation of cylinder 10, for example towards the position represented now by cylinder 8, the product can flow into the cylinder via the opening 12. Generally only part of the channel 16 between the wall portion 15 and the circumferential wall of the cylinders will be filled by the product.

In the position of cylinder 7 the product can no longer enter the cylinder. Moreover in this position the discharge of the product is not possible either. Only after that the opening 12 has passed guide elements 17 and for example has reached the position of cylinder 9 the product can leave the cylinder via the slot-shaped opening 12. The outflow of the product from the cylinder is possible until shortly after reaching the position of cylinder 6.

With its upper side cylinder 5 adjoins closely a horizontal wall section of the product reservoir 1; this prevents that some of the product would be pulverised in the pinch between the circumferential wall of cylinder 5 and the vertical side wall of the product reservoir 1.

By means of the illustrated discharge device an almost continuous discharge of the product present in the product reservoir 1 can be obtained. The discharge velocity hereby depends on the velocity of rotation of the cylinders 5-10. As a result of the opposite directions of rotation no pulverisation of the product (production of "fines") occurs. The continuous discharge moreover prevents the occurence of product bridges above the discharge device. This effect is further enhanced by the scooping action of the slot-shaped openings 12 of the cylinders 5-10.

The illustrated discharge device principally is fit for products with different pellet dimensions. However, it is possible to adapt the dimensions of the perforations of the material from which the cylinders are manufactured in correspondence with the product.

Filling the product reservoir 1 is possible in any position of the cylinders 5-10, for if the cylinders are at a stand still the product cannot pass these cylinders. However, by means of these cylinders a complete product discharge is possible whereby product remainders present in the cylinders are discharged therefrom after only one extra revolution of the cylinders.

As elucidated before the discharge device according to the invention has the important advantage that it creates an effective barrier for the product when the cylinders do not rotate. This advantage can be used cleverly by positioning two discharge devices of the type according to the invention above each other in a counter current cooler. In such a case it is possible to quickly change the product whereby the new product already can be applied above the upper discharge device when the old product is still present between both discharge devices. The only demand is that the upper discharge device is at a stand still.

Generally the cylinders 5-10 of the discharge device are mounted in heavy bearings resulting in a shock-free reliable action which is also fit for very hard pellets.

The invention is limited to the embodiment described before, which can be varied within the scope of the claims.

## Claims

1. Discharge device for use in a counter current cooler or the like having a product reservoir (1), with a number of periodically moving discharge elements (5-10) positioned close to the bottom of the product reservoir (1), whereby the discharge elements comprise a number of juxtaposed and substantially mutually adjoining cylinders (5-10), the centerlines (11) of which extend horizontally and mutually in parallel, wherein each cylinder (5-10) at its circumference is provided with a slot-shaped opening (12) extending mainly in the longitudinal direction of the cylinder (5-10) and wherein the cylinders can be rotated around their respective centerlines (11) for discharging the product, **characterized** in that the cylinders (5-10) are hollow and comprise perforations over their entire circumference such as to allow cooling air to pass from below through said cylinders towards the product reservoir (1) irrespective of the rotational position of said cylinders.

2. Discharge device according to claim 1, **characterized** in that all cylinders (5-10) can rotate in the same direction of rotation.

3. Discharge device according to claim 1 or 2, **characterized** in that the slot-shaped opening (12) is somewhat spirally shaped.

4. Discharge device according to one of the claims 1-3, **characterized** in that a wall section (14) extends inwardly from the rearmost edge (13) of each slot-shaped opening (12) as seen in the direction of rotation, whereas another wall section (15) meets the inner end of the first-named wall section (14), which other wall section (15) extends spirally in the direction of rotation and together with the circumferential wall of the respective cylinder (5-10) defines a narrowing channel (16) that communicates with the inside of the cylinder (5-10).

5. Discharge device according to one of the claims 1-4, **characterized** in that the centerlines (11) of all cylinders (5-10) are positioned in one horizontal plane.

6. Discharge device according to one of the claims 1-5, **characterized** in that the slot-shaped openings (12) of the different cylinders (5-10) take in mutually different angular positions regularly divided in circumferential direction.

7. Discharge device according to one of the claims 1-6, **characterized** in that at discharging the product the cylinders (5-10) rotate at a rate of 1-2 r.p.m..

## Patentansprüche

1. Spendervorrichtung zum Verwenden in einem Gegenstromkühler oder ähnlichem mit einem Produkt-Vorratsraum (1), einer Anzahl von sich periodisch bewegenden Spenderelementen (5-10), welche in der Nähe des Bodens des Produkt-Vorratsraums (1) angeordnet sind, wobei die Spenderelemente eine Anzahl von aneinandergereihten und im wesentlichen aneinandergrenzenden Zylindern (5-10) aufweisen, deren Mittellinien sich horizontal und parallel zueinander erstrecken, wobei jeder der Zylinder (5-10) an seinem Umfang mit einer schlitzförmigen Öffnung (12) versehen ist, welche sich hauptsächlich in Längsrichtung der Zylinder (5-10) erstrecken und wobei die Zylinder um ihre entsprechenden Mittellinien (11) rotieren können, um das Produkt ausgeben zu können, dadurch gekennzeichnet, daß die Zylinder (5-10) hohl sind und über ihren gesamten Umfang mit Perforationen versehen sind, so daß ein Durchströmen von Kühlluft von unten durch die Zylinder in Richtung des Produkt-Vorratsraums (1) unabhängig von der Winkelposition der Zylinder ermöglicht wird.

2. Spendervorrichtung nach Anspruch 1, dadurch gekennzeichnet, daß alle Zylinder (5-10) in die gleiche Drehrichtung rotieren können.

3. Spendervorrichtung nach Anspruch 1 oder 2, dadurch gekennzeichnet, daß die schlitzförmigen Öffnungen (12) eine leicht spiralförmige Form aufweisen.

4. Spendervorrichtung nach einem der Ansprüche 1 bis 3, dadurch gekennzeichnet, daß sich ein Wandabschnitt (14) ausgehend von der hinteren Kante (13) von jeder der schlitzförmigen Öffnungen (12) in Rotationsrichtung gesehen einwärts erstreckt, während ein weiterer Wandabschnitt (15) sich an das innere Ende der erstgenannten Wandabschnitts (14) anschließt, wobei der andere Wandabschnitt (15) sich spiralförmig in Rotationsrichtung erstreckt und zusammen mit der Umfangswand des jeweiligen Zylinders (5-10) einen sich verjüngenden Kanal (16) ausbildet, welcher mit dem Inneren des jeweiligen Zylinders (5-10) in Verbindung steht.

5. Spendervorrichtung nach einem der Ansprüche 1 bis 4, dadurch gekennzeichnet, daß die Mittellinien aller Zylinder (5-10) in einer gemeinsamen horizontalen Ebene angeordnet sind.

6. Spendervorrichtung nach einem der Ansprüche 1 bis 5, dadurch gekennzeichnet, daß die schlitzförmigen Öffnungen (12) der unterschiedlichen Zylinder (5-10) wechselseitig alternierend unterschiedliche Winkelpositionen bezogen auf die Umfangsrichtung einnehmen.

7. Spendervorrichtung nach einem der Ansprüche 1 bis 6, dadurch gekennzeichnet, daß beim Ausgeben der Produkte die Zylinder (5-10) mit einer Drehzahl von 1-2 U/min rotieren.

## Revendications

1. Dispositif d'extraction utilisable dans un refroidisseur à contre-courant ou analogue comprenant un réservoir de produit (1), avec un certain nombre d'éléments d'extraction à mouvement périodique (5-10) placés près du fond du réservoir de produit (1), les éléments d'extraction comprenant un certain nombre de cylindres juxtaposés et sensiblement mutuellement adjacents (5-10) dont les axes (11) s'étendent horizontalement et parallèlement les uns aux autres, chaque cylindre (5-10) présentant dans sa circonférence une ouverture en forme de fente (12) qui s'étend principalement dans la direction longitudinale du cylindre (5-10), et les cylindres pouvant être mis en rotation autour de leurs axes respectifs (11) pour extraire le produit, caractérisé en ce que les cylindres (5-10) sont creux et comportent des perforations sur toute leur circonférence de façon à permettre à l'air de refroidissement de passer, à partir du dessous et à travers lesdits cylindres, vers le réservoir de produit (1) quelle que soit la position angulaire desdits cylindres.

2. Dispositif d'extraction suivant la revendication 1, caractérisé en ce que tous les cylindres (5-10) peuvent tourner dans le même sens de rotation.

3. Dispositif d'extraction suivant la revendication 1 ou 2, caractérisé en ce que l'ouverture en forme de fente (12) est légèrement hélicoïdale.

4. Dispositif d'extraction suivant une des revendications 1 à 3, caractérisé en ce qu'un élément de paroi (14) s'étend vers l'intérieur à partir du bord arrière (13) de chaque ouverture en forme de fente (12) avec référence au sens de rotation, tandis qu'un autre élément de paroi (15) se raccorde à l'extrémité intérieure de l'élément de paroi cité en premier (14), le dit autre élément de paroi (15) s'étendant en spirale dans le sens de rotation et définissant, en combinaison avec la paroi circonférentielle du cylindre respectif (5-10), un canal de section décroissante (16) qui communique avec l'intérieur du cylindre (5-10).

5. Dispositif d'extraction suivant une des revendications 1 à 4, caractérisé en ce que les axes (11) de tous les cylindres (5-10) sont situés dans un même plan horizontal.

6. Dispositif d'extraction suivant une des revendications 1 à 5, caractérisé en ce que les ouvertures en forme de fente (12) des différents cylindres (5-10) occupent des positions angulaires mutuellement différentes et régulièrement réparties dans la direction circonférentielle.

7. Dispositif d'extraction suivant une des revendications 1 à 6, caractérisé en ce que, lors de l'extraction du produit, les cylindres (5-10) tournent à une vitesse de rotation de 1 à 2 tr/min.
